# FASCICULE DE BREVET EUROPEEN

(11) **EP 0 645 516 B1**
(45) Date de publication et mention de la délivrance du brevet: **23.01.2002**
(21) Numéro de dépôt: 94402095.7
(22) Date de dépôt: 21.09.1994
(51) Int. Cl.: E06B 3/677, C03B 23/24, E06B 3/663

(54) **Procédé pour réaliser le vide dans un vitrage isolant et vitrage isolant**
Isolierverglasung und Vakuumerzeugungsverfahren dafür
Insulating glazing and a vacuum generating method therefor

(30) Priorité: 27.09.1993 FR 9311470; 27.09.1993 FR 9311471
(43) Date de publication de la demande: 29.03.1995
(73) Titulaire: SAINT-GOBAIN GLASS FRANCE, 92400 Courbevoie (FR)
(72) Inventeur: Demars, Yves, F-60600 Agnetz (FR)
(74) Mandataire: Muller, René

(56) Documents cités:
- WO-A-87/03327
- WO-A-91/02878
- FR-A- 1 080 192
- FR-A- 1 124 931
- US-A- 2 683 906
- US-A- 2 886 864
- US-A- 2 887 738

## Description

L'invention concerne des vitrages isolants composés d'au moins deux feuilles de verre séparées l'une de l'autre par un faible espace dans lequel le vide a été réalisé.

Il est usuel pour obtenir une isolation thermique et/ou acoustique de réaliser des vitrages isolants comportant deux feuilles de verre séparées l'une de l'autre par une lame d'air relativement importante. De tels vitrages apportent une isolation thermique jugée insuffisante pour certaines applications. Pour y remédier, il est connu de réaliser des vitrages comportant trois feuilles de verre et l'une des lames d'air pouvant être remplacée par un gaz, par exemple le krypton. Ces vitrages ont des propriétés d'isolation thermique nettement améliorées, mais sont d'une épaisseur telle qu'il n'est pas toujours aisé de les utiliser.

Par ailleurs, la demande actuelle des utilisateurs s'oriente vers une isolation thermique des vitrages équivalente à celle des parois pleines, c'est-à-dire des murs.

Il a déjà été proposé notamment dans le brevet WO 91 102 878 des vitrages isolants constitués de deux feuilles de verre séparées l'une de l'autre par un espace dans lequel le vide a été réalisé.

Ces vitrages procurent du fait du vide une très bonne isolation mais ils sont très difficiles à réaliser. D'une part, la faible épaisseur entre les deux feuilles de verre qui est de quelques dixièmes de millimètres doit être constante sur toute la zone où les feuilles de verre sont en regard.

D'autre part, il faut réaliser un scellage des deux feuilles de verre parfaitement étanche.

Le brevet WO 91 102 878 décrit une technique consistant à placer des plots de quelques dixièmes de millimètres d'épaisseur sur l'une des feuilles de verre, répartis sur toute la surface et dans le même temps un joint qui permettra le scellage des deux feuilles. Ces plots et ce joint sont réalisés dans la même matière qui est une composition verrière. Il apparaît que ce vitrage est difficile à réaliser du fait de ces opérations simultanées qui nécessitent des opérations délicates. De plus, le brevet WO 91 102 878 montre un procédé selon le préambule de la revendication 1, ou un disque métallique est placé sur le trou, le disque étant soudé sur la feuille de verre pour obstruer le trou. Alternativement, un tube de verre est placé dans le trou, l'extrémité du tube étant ramollie pour obstruer le trou.

D'autre part, le joint de scellage présente un nombre de bulles qui peuvent être néfastes à l'étanchéité et à l'esthétique.

Ce brevet décrit également un procédé pour réaliser le vide entre les deux feuilles de verre. Il propose notamment d'insérer un tube entre les deux feuilles de verre avant le scellage, sur lequel on vient se raccorder pour pomper l'air. Une autre réalisation consiste à percer un trou au travers de l'une des feuilles de verre et de pomper l'air à travers cet orifice, éventuellement à l'aide d'un dispositif indirectement raccordé au trou et appliqué de façon étanche sur le vitrage.

Dans le premier cas, il est nécessaire de sceller le tube de façon étanche en même temps que les feuilles de verre, ce qui rend difficile les opérations. De plus, il faut, après avoir fait le vide, sceller l'extrémité du tube, puis protéger cette extrémité pour éviter sa casse.

Dans le second cas, le vide peut être réalisé par l'intermédiaire d'un tube préalablement scellé autour du trou. Puis après avoir réalisé le vide, ce tube est fondu de façon à sceller son extrémité. Ce document prévoit encore de boucher l'orifice par scellage d'une pièce métallique ou métallisée en surface du verre. Il prévoit également de fermer le tube, celui-ci étant alors dans l'épaisseur de la feuille de verre. L'inconvénient de certaines de ces réalisations est de fournir un vitrage isolant présentant un point fragile soit sur la périphérie, soit sur une surface. Dans le second cas, il peut subsister de plus une partie du tube à l'extérieur du vitrage, ce qui augmente les risques de détérioration.

Le brevet FR-A-1 124 931 décrit une technique d'obturation d'un orifice par fusion d'une bille de verre de soudure placée dans un tube introduit dans l'orifice. Ce document prévoit l'obturation d'un tel orifice après équilibrage des pressions intérieure et extérieure d'un double vitrage.

L'invention a pour but un vitrage isolant composé d'au moins deux feuilles de verre, entre lesquelles un vide a été réalisé, qui est facilement réalisable et dont le joint de scellage ne présente pas de défaut. Un tel vitrage est défini par la revendication 8.

L'invention a également pour but un procédé pour effectuer le vide au sein d'un vitrage isolant conduisant à un vitrage de ce type ne présentant pas de point de fragilité. Un tel procédé est défini par la revendication 1.

Un vitrage isolant sous vide selon l'invention est constitué de deux feuilles de verre, l'une des feuilles de verre comportant un trou percé dans son épaisseur et est constitué dans une zone sur l'une de ses faces d'un matériau présentant un point de ramollissement inférieur à celui des feuilles de verre.

L'invention propose selon une variante avantageuse que les deux feuilles de verre du vitrage entre lesquelles le vide a été réalisé, soient séparées l'une de l'autre par des plots répartis sur toute la surface et réunies à leur périphérie par un joint de scellage, les plots étant constitués d'au moins une suspension de verre de soudure fritté qui est dévitrifiée lors de la réalisation des plots.

La dévitrification de la suspension de verre de soudure fritté est obtenue par un traitement thermique.

Les plots ainsi réalisés permettent de maintenir un espace régulier entre les deux feuilles de verre. Selon une variante de l'invention, les plots sont constitués d'un mélange d'une matière du type céramique à température de fusion très élevée, enrobée par la suspension de verre de soudure fritté. Cette réalisation améliore encore la tenue des plots et évite tout risque d'écrasement d'un plot lors de sa réalisation. Cette matière est choisie parmi des matériaux tels que alumine, carbure de silicium, etc..

Les plots séparant les deux feuilles de verre ont avantageusement un diamètre inférieur à 0,5 mm et une épaisseur comprise entre 0,1 et 0,3 millimètre. Leur nombre est avantageusement compris entre 600 et 1500 au mètre carré et de préférence égal à 1000 au mètre carré.

Suivant un mode préféré de l'invention, le joint de scellage est réalisé avec la suspension de verre de soudure fritté utilisée dans la réalisation des plots.

Dans une variante, celle-ci peut également subir un traitement thermique conduisant à sa dévitrification.

Le joint de scellage ainsi réalisé permet d'obtenir une bonne étanchéité qui conduit à une bonne pérennité des vitrages dans lesquels le vide a été réalisé. De plus, il apparaît que de tels joints présentent une très faible quantité de bulles qui pourraient être nuisibles à l'étanchéité ou à l'esthétisme.

Les résultats obtenus sont donc tout à fait satisfaisants. D'autre part, la réalisation de ces vitrages est simplifiée par rapport à ce qui était connu jusque là. En effet, la dévitrification de la suspension constituant au moins une partie des plots permet de modifier le profil de viscosité en fonction de la température de cette matière. La température de ramollissement de la suspension dévitrifiée est supérieure à celle de la suspension dans l'état vitreux. Il est alors possible de réaliser le joint de scellage dans une seconde étape, le traitement thermique ne risquant pas de détériorer les plots déjà constitués.

Les deux feuilles de verre subissent avantageusement une trempe par refroidissement après l'un ou l'autre des traitements thermiques. Cette trempe permet de renforcer la résistance des feuilles de verre lors de la réalisation du vide.

D'autre part, au moins l'une des feuilles de verre comporte avantageusement une couche basse émissive sur une face interne, c'est-à-dire en contact avec les plots. Cette couche peut contribuer à la fonction d'isolation thermique.

Les problèmes énoncés, liés à la réalisation du vide d'un vitrage isolant qui laisse subsister un point de fragilité sur un tel vitrage sont résolus selon l'invention par un procédé pour la réalisation d'un vide entre deux feuilles de verre formant un vitrage isolant, consistant à percer un trou d'un diamètre compris entre 1 et 3 millimètres au travers d'une des feuilles, à placer une bille à l'extrémité extérieur du trou, à réaliser le vide, puis à ramollir la bille pour la sceller sur la feuille de verre de façon à obstruer l'orifice du trou.

La bille est avantageusement réalisée en un matériau possédant une température de ramollissement nettement inférieure à celle de la feuille de verre. De cette façon, elle peut être ramollie sans que la structure du verre évolue et soit détériorée.

Le matériau est choisi tel que la température de ramollissement soit proche de 400°C, c'est-à-dire entre 380 et 450°C.

Le coefficient de dilatation de ce matériau est avantageusement choisi voisin de celui de la feuille de verre pour éviter tout risque de rupture par cisaillement.

De façon préférée, la surface de la feuille de verre sur laquelle la bille doit être scellée est élevée à la température de ramollissement de la bille. Le scellage ainsi obtenu renforce encore l'étanchéité.

La fermeture ainsi réalisée du trou, préalablement percé au travers de la feuille de verre, permet d'obtenir une surface relativement homogène et présentant une meilleure résistance que le scellage d'un tube.

De plus, selon l'invention, il n'y a pas d'extrémité de tube débordant de la surface comme l'art antérieur l'enseigne.

Dans une variante selon l'invention, l'extrémité du trou affleurant la surface est fraisée de sorte que le matériau, se présentant initialement sous la forme d'une bille, viennent remplir ce creux. Il est ainsi possible que ce matériau vienne en continuité de la surface de la feuille de verre.

Le ramollissement de la bille est obtenu de préférence en plaçant une résistance électrique au-dessus du vitrage à proximité de la bille.

Le matériau constituant la bille peut être celui constituant les plots et le joint de scellage. Il apparaît alors très intéressant d'utiliser la technique pour faire le vide selon l'invention avec le vitrage décrit puisque la fusion de la bille ne peut entraîner aucune dégradation des plots et du joint de scellage lorsque ceux-ci ont subi un traitement de dévitrification.

Le matériau constituant la bille peut être d'une nature différente et procurer les mêmes avantages dès lors que sa température de ramollissement est inférieur à celle du matériau constituant les plots et le joint de scellage, dans son état dévitrifié.

Toutefois, il n'est pas exclu de pouvoir utiliser le procédé décrit pour réaliser le vide entre deux feuilles de verre, constituant un vitrage isolant, séparées par des moyens autres que ceux des plots et du joint de scellage décrit dans la demande.

De même, le vide réalisé dans un vitrage isolant comportant les plots et le joint de scellage tels que précédemment décrits peut l'être par un procédé différent de celui qui est décrit.

D'autres détails et caractéristiques avantageuses de l'invention ressortiront ci-après de la description des exemples de réalisation en référence aux figures qui representent:
- figure 1, une vue de côté en élévation d'une partie d'un vitrage selon l'invention,
- figure 2, une vue de dessus en coupe d'une partie de ce même vitrage.
- figure 3, une vue de côté en élévation d'un vitrage préparé pour faire le vide,
- figure 4, une vue de côté en élévation de ce même vitrage après avoir scellé l'orifice.

Les dimensions de ces figures ne sont bien entendu pas représentatives de la réalité.

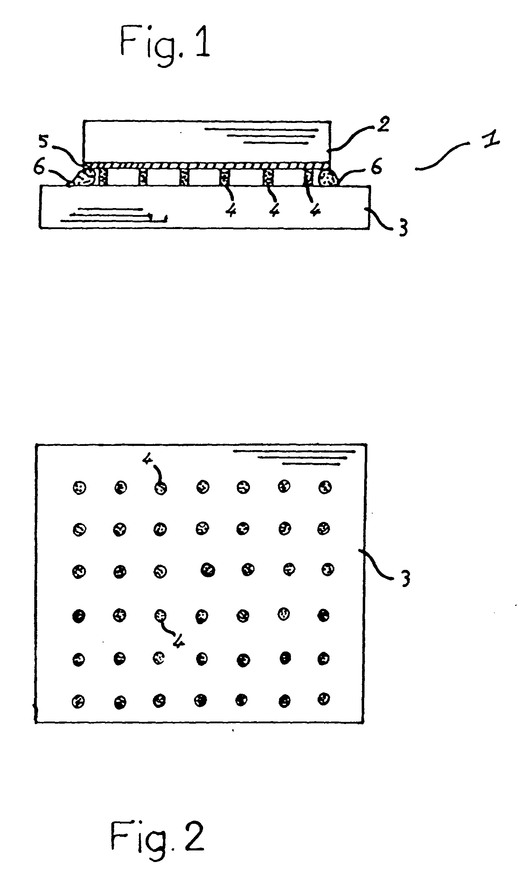

Sur la figure 1 est représentée une vue partielle de côté, en élévation, d'un schéma d'un vitrage 1 selon l'invention. Ce vitrage 1 se compose de deux feuilles de verre 2 et 3 séparées l'une de l'autre par des plots intercalaires 4. Les feuilles de verre ont chacune une épaisseur de 4 millimètres. Selon cette représentation, la feuille de verre 2 est revêtue sur sa face interne d'une couche basse émissive 5. Cette couche est par exemple du type de celle décrite dans la demande de brevet française déposée au nom de Saint Gobain Vitrage International sous le numéro 93 01 545. Les plots 4 ont une épaisseur de 0,2 millimètre et un diamètre de 0,4 millimètre. Ils sont répartis sur toute la surface des feuilles de verre et sont distants les uns des autres de 30 millimètres. Cette disposition apparaît plus nettement sur la figure 2. Ces plots 4 sont constitués d'une part d'une matière à température de fusion très élevée telle que l'alumine qui se présente sous forme de grains, ceux-ci étant enrobés d'autre part par une suspension de verre de soudure fritté. Cette suspension est par exemple celle décrite dans le brevet d'invention français 2 433 495. Cette suspension de verre de soudure fritté est choisie de sorte que sa température de ramollissement soit nettement plus basse que celle du verre, pour ne pas détériorer les feuilles de verre durant les traitements thermiques. La suspension est également choisie avec un coefficient de dilatation équivalent à celui des feuilles de verre pour qu'il n'y ait pas de risque de cisaillement entre les plots et les feuilles de verre.

Ces plots 4 sont par exemple déposés par une technique du type sérigraphie ou bien à l'aide d'un dispositif du type micro-seringue ou bien à l'aide de tout dispositif connu de l'homme du métier sur l'une des feuilles de verre 2, 3.

Ces plots 4 subissent ensuite un traitement thermique de façon à éliminer les corps organiques et à lier la suspension aux feuilles de verre. Dans le même temps, les grains de matière non fusible aux températures atteintes permettent de conserver la forme et les dimensions des plots qui ne s'étalent pas.

Le traitement thermique selon l'invention est tel qu'il conduit à une dévitrification de la suspension. Ceci permet de modifier le profil de viscosité de la suspension en fonction de la température, c'est-à-dire que pour une température donnée la viscosité de la suspension est supérieure dans l'état dévitrifié à celle correspondant à l'état vitreux.

La seconde feuille de verre est alors déposée sur ces plots en regard de la précédente.

La feuille de verre 3 possède une dimension légèrement supérieure à la feuille de verre 2. Ce surdimensionnement pourra permettre un montage ultérieur plus aisé. Un autre intérêt de ce surdimensionnement est de permettre le dépôt de la composition de scellage sur la périphérie de cette feuille de verre 3 qui va migrer par capillarité entre les deux feuilles de verre pour former un joint de scellage 6. La composition de scellage est identique à celle utilisée pour l'enrobage des plots. De la même façon, on effectue un traitement thermique qui peut être identique au précédent, c'est-à-dire celui concernant les plots 4, et conduire à une dévitrification de la suspension. Le profil de viscosité de la composition étant modifié après dévitrification, il est possible d'effectuer ce second traitement thermique sans risque de détérioration des plots 4.

Après ce second traitement thermique, le vitrage ainsi constitué est refroidi de façon à réaliser une trempe des deux feuilles de verre 2, 3. Cette trempe permet de conférer des propriétés mécaniques aux feuilles de verre 2, 3 qui peuvent ainsi mieux résister aux opérations consistant à faire le vide. La valeur de ce vide est proche de 10⁻⁴ Torr.

Le vitrage ainsi décrit selon l'invention procure une bonne isolation thermique. Elle est comparable à celle apportée par des vitrages comportant trois feuilles de verre, une lame d'air et une lame remplie d'un gaz du type Krypton. Un tel vitrage a une épaisseur d'environ 30 millimètres. Un avantage évident du vitrage selon l'invention est de revenir à une épaisseur inférieure à 10 millimètres pour une isolation thermique équivalente et donc une utilisation simplifiée.

D'autre part, l'aspect esthétique de ce vitrage est satisfaisant. Tout d'abord la dimension des plots répartis de façon homogène sur toute la surface les rendent très discrets. D'autre part, ces plots qui conservent leurs dimensions durant la réalisation du vitrage, permettent d'éviter tout contact entre les deux feuilles de verre. Il n'apparaît donc pas de cercles de Newton qui ont un effet inesthétique lorsqu'ils apparaissent sur un tel vitrage.

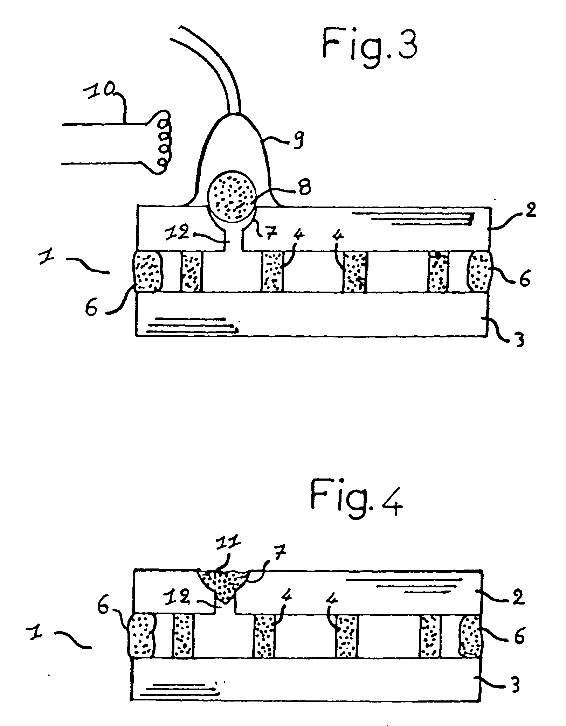

Sur la figure 3 est représenté un vitrage isolant 1 composé de deux feuilles de verre 2 et 3 séparées l'une de l'autre par un ensemble de plots 4 répartis sur toute la surface du vitrage. Ces plots 4 ont un diamètre inférieur à 0,5 millimètre de façon à être peu visibles. Et ils présentent une épaisseur inférieure à 0,3 millimètre pour maintenir un espace très faible entre les deux feuilles de verre. Sur la périphérie du vitrage, un joint de scellage 6 assure l'étanchéité de l'espace compris entre les deux feuilles de verre.

La feuille de verre 2 comporte un perçage 12 qui constitue un passage pour l'air. L'extrémité supérieure 7 de ce perçage est fraisée. Cette extrémité fraisée 7 reçoit une bille 8 qui est maintenue dans cette forme conique. Cette bille 8 est réalisée en une suspension de verre de soudure fritté telle que celle décrite dans le brevet d'invention français 2 433 495. Cette suspension de verre de soudure fritté est choisie de sorte que sa température de ramollissement soit nettement plus basse que celle du verre, pour ne pas détériorer la feuille de verre durant le traitement thermique sur lequel il sera revenu par la suite. La suspension est également choisie avec un coefficient de dilatation équivalent à celui de la feuille de verre.

Un dispositif 9 vient envelopper l'extrémité 7 sur laquelle est placée la bille 8. Ce dispositif 9 qui peut être un tube, une cloche ou tout autre dispositif connu de l'homme du métier est l'extrémité venant au contact du vitrage, du système permettant de faire le vide. Ce système n'est pas représenté sur les figures. Il peut s'agir de tout système connu permettant d'atteindre une pression inférieure à 10⁻³ Torr.

A proximité de ce dispositif 9 est placée une résistance électrique schématisée par le filament 10. Cette résistance permet, après avoir réalisé le vide, d'amener la bille 8 à sa température de ramollissement. Son volume est défini de façon à ce qu'elle remplisse l'extrémité fraisée 7 du trou.

La figure 4 représente le même vitrage après cette opération. La bille 8 a alors pris la forme du colmatage 11 qui est scellé à l'extrémité du trou. Il assure alors une bonne étanchéité. Une fois ce colmatage bien refroidi, le dispositif 9 est retiré.

Le traitement thermique appliqué pour transformer la bille et sceller l'extrémité 7 ne doit pas détériorer l'ensemble du vitrage ni le dispositif 9, généralement en verre. C'est pourquoi le matériau constituant la bille 8 est choisi tel que sa température de ramollissement soit nettement inférieure à celle du verre. Par ailleurs, pour ne pas dégrader les plots 4 et le joint de scellage 6, ceux-ci peuvent être réalisés avec le même matériau que celui constituant la bille 8. Pour que les plots 4 et le joint 6 ne se ramollissent pas, ceux-ci ont préalablement subi un traitement thermique, notamment lors de leur formation, qui a conduit ledit matériau dans un état dévitrifié. De cette façon la température de ramollissement de ces éléments a été élevée et lorsque la bille 8 est amenée à son point de ramollissement, les plots 4 et le joint 6 restent dans leur état et conservent leurs formes et leurs dimensions .

Le procédé ainsi décrit permet d'obtenir un vitrage isolant sous vide qui ne présente aucun point de fragilité. En effet, le colmatage 11 a une épaisseur relativement importante qui lui confère une bonne résistance, contrairement au scellage d'un simple tube qui reste fragile. De plus, le vitrage obtenu ne présente quasiment aucun relief à sa surface puisque le colmatage 11 s'insère dans l'orifice fraisé 7.

## Revendications

1. Procédé pour réaliser le vide entre deux feuilles de verre (2, 3) constituant un vitrage isolant (1), l'une de ces feuilles de verre comportant un trou (12) percé dans son épaisseur, ***caractérisé en ce qu'on*** place une bille (8) à l'extrémité externe (7) du trou, ***et en ce qu'on*** réalise le vide, ***et en ce qu'on*** ramollit la bille (8) pour la sceller sur la feuille de verre de façon à obstruer ledit trou (12).

2. Procédé selon la revendication 1, ***caractérisé en ce que*** le diamètre du trou est compris entre 1 et 3 millimètres.

3. Procédé selon la revendication 1 ou 2, ***caractérisé en ce que*** la bille (8) est réalisée en un matériau possédant une température de ramollissement inférieure à celle de la feuille de verre et de préférence comprise entre 380 et 450°C.

4. Procédé selon la revendication 3, ***caractérisé en ce que*** le coefficient de dilatation du matériau constituant la bille (8) est voisin de celui de la feuille de verre.

5. Procédé selon l'une des revendications précédentes, ***caractérisé en ce que*** la température de la feuille de verre est élevée à celle de ramollissement de la bille (8) simultanément au ramollissement de ladite bille.

6. Procédé selon l'une des revendications précédentes, ***caractérisé en ce que*** l'extrémité externe (7) du trou (12) est fraisée.

7. Procédé selon l'une des revendications précédentes, ***caractérisé en ce que*** le ramollissement de la bille (8) est obtenu en plaçant une résistance électrique au-dessus du vitrage.

8. Vitrage isolant sous vide susceptible d'être obtenu selon l'une des revendications 1 à 7, ***caractérisé en ce qu'il*** présente sur l'une de ses faces une zone constitué d'un matériau présentant un point de ramollissement inférieur à celui des feuilles de verre.

9. Vitrage isolant (1) selon la revendication 8, les deux feuilles de verre étant séparées l'une de l'autre par des plots (4) répartis sur toute la surface, et réunies à leur périphérie par un joint de scellage (6), ***caractérisé en ce que*** les plots (4) sont constitués d'au moins une suspension de verre de soudure fritté, dévitrifiée lors de la réalisation desdits plots.

10. Vitrage isolant (1) selon la revendication 9, ***caractérisé en ce que*** les plots (4) sont constitués par une matière du type céramique, telle que alumine, carbure de silicium à température fusion élevée, enrobée par la suspension de verre de soudure fritté.

11. Vitrage isolant (1) selon la revendication 9 ou 10, ***caractérisé en ce que*** les plots (4) ont un diamètre inférieur à 0,5 millimètres et une épaisseur comprise entre 0,1 et 0,3 millimètres.

12. Vitrage isolant (1) selon l'une des revendications 9 à 11, ***caractérisé en ce que*** le nombre des plots (4) au mètre carré est compris entre 600 et 1500 et de préférence égal à 1000.

13. Vitrage isolant (1) selon l'une des revendications 9 à 12, ***caractérisé en ce que*** le joint de scellage (6) est constitué de la suspension de verre de soudure fritté.

14. Vitrage isolant (1) selon la revendication 13, ***caractérisé en ce que*** la suspension de verre de soudure fritté constituant le joint de scellage (6) est dévitrifié.

15. Vitrage isolant (1) selon l'une des revendications 9 à 14, ***caractérisé en ce que*** les feuilles de verre (2, 3) ont une épaisseur de 4 millimètres.

16. Vitrage isolant (1) selon l'une des revendications 9 à 15, ***caractérisé en ce qu'au*** moins une des feuilles de verre (2, 3) est trempée.

17. Vitrage isolant (1) selon l'une des revendications 9 à 16, ***caractérisé en ce qu'au*** moins une des feuilles de verre (2, 3) possède une couche basse émissive (5) sur sa face en contact avec les plots (4).

18. Vitrage isolant (1) selon l'une des revendications 8 à 17, ***caractérisé en ce que*** l'une des feuilles de verre (2,3) possède une superficie supérieure à l'autre feuille de verre.

## Patentansprüche

1. Verfahren zur Erzeugung eines Vakuums zwischen zwei Glasscheiben (2, 3), die ein Isolierglas (1) bilden, wobei eine der Glasscheiben ein durchgehendes Loch (12) enthält, **dadurch gekennzeichnet, dass** am äußeren Ende (7) des Lochs eine Kugel (8) angeordnet wird, **dass** das Vakuum angelegt und die Kugel (8) erweicht wird, damit sie derart auf der Glasscheibe fließt, dass sie das Loch (12) verschließt.

2. Verfahren nach Anspruch 1, **dadurch gekennzeichnet, dass** der Durchmesser des Lochs 1 bis 3 Millimeter beträgt.

3. Verfahren nach Anspruch 1 oder 2, **dadurch gekennzeichnet, dass** die Kugel (8) aus einem Material hergestellt ist, dessen Erweichungstemperatur niedriger als diejenige der Glasscheibe ist und vorzugsweise 380 bis 450 °C beträgt.

4. Verfahren nach Anspruch 3, **dadurch gekennzeichnet, dass** der Ausdehnungskoeffizient des die Kugel (8) bildenden Materials in der Nähe desjenigen der Glasscheibe liegt.

5. Verfahren nach einem der vorhergehenden Ansprüche, **dadurch gekennzeichnet, dass** die Temperatur der Glasscheibe auf die Erweichungstemperatur der Kugel (8) gleichzeitig mit der Erweichung dieser Kugel gebracht wird.

6. Verfahren nach einem der vorhergehenden Ansprüche, **dadurch gekennzeichnet, dass** das äußere Ende (7) des Lochs (12) angefast ist.

7. Verfahren nach einem der vorhergehenden Ansprüche, **dadurch gekennzeichnet, dass** die Erweichung der Kugel (8) erreicht wird, indem über dem Isolierglas ein Heizwiderstand angeordnet wird.

8. Isolierglas, das ein Vakuum enthält und gemäß einem der Ansprüche 1 bis 7 hergestellt werden kann, **dadurch gekennzeichnet, dass** es auf einer Seite einen Bereich aufweist, der aus einem Material gebildet ist, dessen Erweichungstemperatur niedriger als die der Glasscheiben ist.

9. Isolierglas (1) nach Anspruch 8, wobei die zwei Glasscheiben durch auf der gesamten Fläche verteilte Stifte (4) voneinander getrennt und am Umfang durch eine Dichtung (6) vereinigt sind, **dadurch gekennzeichnet, dass** die Stifte (4) aus mindestens einem Glaslot bestehen, das bei der Herstellung der Stifte entglast wird.

10. Isolierglas (1) nach Anspruch 9, **dadurch gekennzeichnet, dass** die Stifte (4) aus einem Material vom Typ Keramik wie Aluminiumoxid und Siliciumcarbid mit hoher Schmelztemperatur bestehen, das von dem Glaslot ummantelt ist.

11. Isolierglas (1) nach Anspruch 9 oder 10, **dadurch gekennzeichnet, dass** die Stifte (4) einen Durchmesser von unter 0,5 Millimetern und eine Dicke von 0,1 bis 0,3 Millimetern besitzen.

12. Isolierglas (1) nach einem der Ansprüche 9 bis 11, **dadurch gekennzeichnet, dass** die Anzahl der Stifte (4) pro Quadratmeter 600 bis 1 500 und vorzugsweise 1 000 beträgt.

13. Isolierglas (1) nach einem der Ansprüche 9 bis 12, **dadurch gekennzeichnet, dass** die Dichtung (6) aus dem Glaslot besteht.

14. Isolierglas (1) nach Anspruch 13, **dadurch gekennzeichnet, dass** das die Dichtung (6) bildende Glaslot entglast ist.

15. Isolierglas (1) nach einem der Ansprüche 9 bis 14, **dadurch gekennzeichnet, dass** die Dicke der Glasscheiben (2, 3) 4 Millimeter beträgt.

16. Isolierglas (1) nach einem der Ansprüche 9 bis 15, **dadurch gekennzeichnet, dass** mindestens eine der Glasscheiben (2, 3) vorgespannt ist.

17. Isolierglas (1) nach einem der Ansprüche 9 bis 16, **dadurch gekennzeichnet, dass** mindestens eine der Glasscheiben (2, 3) auf ihrer mit den Stiften (4) im Kontakt befindlichen Seite eine niedrig emittierende Schicht (5) besitzt.

18. Isolierglas (1) nach einem der Ansprüche 8 bis 17, **dadurch gekennzeichnet, dass** die Fläche einer der Glasscheiben (2, 3) größer als die der anderen Glasscheibe ist.

## Claims

1. Method for producing a vacuum between two glass sheets (2, 3) constituting an insulating glazing (1), one of said glass sheets having a hole (12) made through its thickness, **characterized in that** a ball (8) is placed at the outer end (7) of the hole, **in that** the vacuum is formed and **in that** the ball (8) is softened in order to seal it onto the glass sheet so as to block said hole (12).

2. Method according to claim 1, **characterized in that** the diameter of the hole is between 1 and 3 millimetres.

3. Method according to claim 1 or 2, **characterized in that** the ball (8) is made from a material having a softening point lower than that of the glass sheet and preferably between 380 and 450°C.

4. Method according to claim 3, **characterized in that** the expansion coefficient of the material constituting the ball (8) is close to that of the glass sheet.

5. Method according to one of the preceding claims, **characterized in that** the temperature of the glass sheet is raised to the softening point of the ball (8) simultaneously with the softening of the latter.

6. Method according to one of the preceding claims, **characterized in that** the outer end (7) of the hole (12) is milled.

7. Method according to one of the preceding claims, **characterized in that** the ball (8) is softened by placing an electrical resistor above the glazing.

8. Vacuum insulating glazing obtainable according to one of the claims 1 to 7, **characterized in that** it has on one of its faces a zone constituted by a material having a softening point lower than that of the glass sheets.

9. Insulating glazing (1) according to claim 8, the two glass sheets being separated from one another by studs (4) distributed over the entire surface and peripherally joined by a sealing joint (6), **characterized in that** the studs (4) are constituted by at least one sintered solder glass suspension devitrified during the formation of said studs.

10. Insulating glazing (1) according to claim 9, **characterized in that** the studs (4) are constituted by a ceramic material such as alumina or silicon carbide having a high melting point and coated with the sintered solder glass suspension.

11. Insulating glazing (1) according to claim 9 or 10, **characterized in that** the studs (4) have a diameter below 0.5 millimetres and a thickness between 0.1 and 0.3 millimetres.

12. Insulating glazing according to one of the claims 9 to 11, **characterized in that** the number of studs (4) per square metre is between 600 and 1500 and is preferably 1000.

13. Insulating glazing (1) according to one of the claims 9 to 12, **characterized in that** the sealing joint (6) is constituted by the sintered solder glass suspension.

14. Insulating glazing (1) according to claim 13, **characterized in that** the sintered solder glass suspension forming the sealing joint (6) is devitrified.

15. Insulating glazing (1) according to one of the claims 9 to 14, **characterized in that** the glass sheets (2, 3) have a thickness of 4 millimetres.

16. Insulating glazing (1) according to one of the claims 9 to 15, **characterized in that** at least one of the glass sheets (2, 3) is toughened.

17. Insulating glazing (1) according to one of the claims 9 to 16, **characterized in that** at least one of the glass sheets (2, 3) has a low emissive layer (5) on its face in contact with the studs (4).

18. Insulating glazing (1) according to one of the claims 8 to 17, **characterized in that** one of the glass sheets (2, 3) has a larger surface area than the other glass sheet.
